# EUROPEAN PATENT APPLICATION

(11) **EP 4 520 590 A1**
(43) Date of publication of application: **12.03.2025**
(21) Application number: 24191641.0
(22) Date of filing: 30.07.2024
(51) Int. Cl.: B60P 7/08, B65D 63/10

(54) **STRETCH-BAND FIXINGS**

(30) Priority: 11.09.2023 US 202363581848 P; 17.07.2024 US 202418775821
(71) Applicant: HellermannTyton Corporation, Milwaukee, WI 53224 (US)
(72) Inventor: Geiger, Gerard G., Jackson, WI, 53037 (US)
(74) Representative: Hernandez, Yorck

(57) **Abstract**

A stretch band fixing may include a first cable tie formed of a non-elastic material, a second cable tie formed of the non-elastic material, and a tension device formed of an elastic material. The first cable tie includes a first head including a first pawl mechanism and a first elongated strap having a plurality of first serrations. The second cable tie includes a second head including a second pawl mechanism and a second elongated strap having a plurality of second serrations. The tension device connects the first head to the second head and includes a first overmold portion overmolded onto at least a portion of the first cable tie to form a first mechanical interlock and a second overmold portion overmolded onto at least a portion of the second cable tie to form a second mechanical interlock.

## Description

### CROSS-REFERENCE TO RELATED APPLICATION(S)

This application claims the benefit of U.S. Provisional Patent Application Serial No. 63/581,848, filed on September 11, 2023, the disclosure of which is incorporated by reference herein in its entirety.

### BACKGROUND

Cargo straps are frequently utilized to secure a load (e.g., an object) relative to a support structure (e.g., a mounting surface, a mount, a vehicle chassis, a trailer, a shipping platform (e.g., a pallet), a bracket, or the like). A cargo strap may be utilized to combine one or more elongated objects (e.g., wires, harnesses, hoses, tubes, cables, and the like) into a bundle, which may be secured to a support structure. A cargo strap includes a first connector for connecting to a support structure, a flexible elongated member (e.g., a chain, a wire, a strap, a rope) for holding the object, and a second connector for connecting to the support structure. The flexible elongated member extends between the first connector and the second connector. The support structure may include one or more supports to which at least one of the first connector or the second connector attaches.

A cargo strap may include a tensioner configured for tensioning the flexible elongated member and thereby applying a force to the load. An example of a cargo strap including a tensioner is a ratcheting cargo strap that includes a ratchet device for tensioning a strap. In other aspects, a cargo strap includes an elastic flexible elongated member and the force applied to the load is supplied by stretching of the elastic flexible elongated member. An example of an elastic cargo strap is a rubber tie-down strap that includes a metal hook on a first end and a metal hook on a second end.

### SUMMARY

This document describes stretch-band fixings. The stretch-band fixings, in aspects, are stretchable cable tie assemblies. A stretch-band fixing may be utilized as a cargo strap to secure a load relative to a support structure. In other aspects, a stretch-band fixing may be utilized to combine one or more elongated objects into a bundle, which may be connected to a support structure.

In some aspects, the techniques and apparatuses described herein relate to a stretch-band fixing including: a first cable tie formed of a non-elastic material, the first cable tie including a first head including a first pawl mechanism and a first elongated strap having a plurality of first serrations, the first head configured for receiving the first elongated strap with the first pawl mechanism engaging the first serrations; a second cable tie formed of the non-elastic material, the second cable tie including a second head including a second pawl mechanism and a second elongated strap having a plurality of second serrations, the second head configured for receiving the second elongated strap with the second pawl engaging the second serrations; and a tension device formed of an elastic material, the tension device connecting the first head to the second head, the tension device further including: a first overmold portion overmolded onto at least a portion of the first cable tie to form a first mechanical interlock; and a second overmold portion overmolded onto at least a portion of the second cable tie to form a second mechanical interlock.

In some aspects, the techniques and apparatuses described herein relate to a stretch-band fixing including: a first connector including a first non-elastic material, the first connector including an outer side opposite an inner side, a first retainer extending from the first connector inner side, and a first elongated strap having a plurality of first serrations, the first connector further including a first head including: a first slot defined through the first head and configured to receive the first elongated strap; and a first pawl mechanism hingedly disposed within the first slot, the first pawl including multiple first pawl teeth configured to engage the plurality of first serrations on the first elongated strap when the first elongated strap is disposed within the first slot; a second connector including a second non-elastic material, the second connector including an outer side opposite an inner side, a second retainer extending from the second connector inner side, and a second elongated strap having a plurality of second serrations, the second connector further including a second head including: a second slot defined through the second head and configured to receive the second elongated strap; and a second pawl mechanism hingedly disposed within the second slot, the second pawl including multiple second pawl teeth configured to engage the plurality of second serrations on the second elongated strap when the second elongated strap is disposed within the second slot; and a tension device including an elastic material, the tension device connecting the inner side of the first connector to the inner side of the second connector, the tension device further including: a first overmold portion overmolded onto at least a portion of the first retainer to form a first mechanical interlock; and a second overmold portion overmolded onto at least a portion of the second retainer to form a second mechanical interlock.

In some aspects, the techniques and apparatuses described herein relate to a stretch-band fixing including: a first connector including a first non-elastic material, the first connector including an outer side opposite an inner side, a first retainer extending from the first connector inner side, and a first elongated strap having a plurality of first serrations, the first elongated strap extending away from the outer side of the first connector, the first connector further including a first head including: a first slot defined through the first head and configured to receive the first elongated strap; and a first pawl hingedly disposed within the first slot, the first pawl including multiple first pawl teeth configured to engage the plurality of first serrations on the first elongated strap when the first elongated strap is disposed within the first slot; a second connector including a second non-elastic material, the second connector including an outer side opposite an inner side, a second retainer extending from the second connector inner side, and a second elongated strap having a plurality of second serrations, the second elongated strap extending away from the outer side of the second connector, the second connector further including a second head including: a second slot defined through the second head and configured to receive the second elongated strap; and a second pawl hingedly disposed within the second slot, the second pawl including multiple second pawl teeth configured to engage the plurality of second serrations on the second elongated strap when the second elongated strap is disposed within the second slot; and a tension device including an elastic material, the tension device connecting the inner side of the first connector to the inner side of the second connector, the tension device further including: a first overmold portion overmolded onto at least a portion of the first retainer to form a first mechanical interlock, the overmolding of the first overmold portion chemically bonding the first overmold portion to the tension device; and a second overmold portion overmolded onto at least a portion of the second retainer to form a second mechanical interlock, the overmolding of the second overmold portion chemically bonding the second overmold portion to the tension device.

This Summary is provided to introduce simplified concepts of stretch-band fixings, which are further described below in the Detailed Description and are illustrated in the Drawings. This Summary is not intended to identify essential features of the claimed subject matter, nor is it intended for use in determining the scope of the claimed subject matter.

### BRIEF DESCRIPTION OF THE DRAWINGS

The details of one or more aspects of stretch-band fixings are described with reference to the following Drawings, in which use of the same numbers in different instances may indicate like features and/or components. In some views, broken lines are utilized to indicate an indeterminate length.
FIG. 1 is a schematic representation of a stretch-band fixing.
FIG. 2A is a first detail view of the aspect of FIG. 1.
FIG. 2B is a second detail view of the aspect of FIG. 1.
FIG. 3 is a schematic representation of a stretch-band fixing.
FIG. 4 is a plan view of an example stretch-band fixing.
FIG. 5 is a side view of the stretch-band fixing of FIG. 4.
FIG. 5A is a cross-sectional view along lines SA-SA of FIG. 5.
FIG. 6A is a partial, plan view of the stretch-band fixing of FIG. 4.
FIG. 6B is a partial, perspective view of the stretch-band fixing of FIG. 6A.
FIG. 7 is a partial, perspective view of a stretch-band fixing.
FIG. 8A is a partial, perspective view of a stretch-band fixing.
FIG. 8B is a partial, perspective view of a stretch-band fixing.
FIG. 8C is a partial, perspective view of a stretch-band fixing.
FIG. 8D is a partial, perspective view of a stretch-band fixing.
FIG. 8E is a partial, perspective view of a stretch-band fixing.
FIG. 9 is a partial, plan view of a stretch-band fixing.
FIG. 10 is an environmental view of an example stretch-band fixing.
FIG. 11 is an environmental view of another example stretch-band fixing.

### DETAILED DESCRIPTION

This document describes techniques and apparatuses directed to stretch-band fixings. In aspects, the stretch-band fixings include stretchable cable tie assemblies. Optional features of one aspect described herein may be combined with other aspects to form further aspects.

The term "elastic," as used herein, means a material (e.g., an "elastic material") that exhibits recovery from stretching or deformation in at least one direction, unless the context indicates otherwise. For example, elastic may refer to a material that, upon application of a biasing force, is stretchable from an original relaxed length and that will recover to substantially the original relaxed length upon release of the stretching, elongating force.

An elastic material may have isotropic (same in all directions) properties and a high Poisson's ratio. The Poisson's ratio is a measure of the Poisson effect-the deformation (expansion or contraction) of a material in directions perpendicular to a specific direction of loading. The value of the Poisson's ratio is the negative of the ratio of transverse strain to axial strain. For small values of these changes, the Poisson's ratio is the amount of transversal elongation divided by the amount of axial compression (e.g., -ΔWidth (or -ΔThickness) / ΔLength).

An elastic material may possess high intrinsic stretchability (e.g., 500% elongation). The amorphous structure of a suitable elastic material may contain polymer chain entanglement or entropy that contains molecular chain voids or greater free volume among the chains. During stretching, the molecular chains may reorient and align. When this happens, the free volume between the molecular chains may decrease and the overall elastic material volume may decrease while the density increases-all due to increasing chain orientation. During such a transformation, frictional grip strength properties may improve between elastic material portion(s) when stretched and secured around a bundle. Also, the applied circumferential force of the stretch-band fixing during installation assembly may be a factor that may increase the normal force of the elastic material against the bundle, which further may increase the frictional grip strength.

In aspects, a suitable elastic material may have a minimum elongation of at least 100%, a Shore A hardness of approximately 50 to 70, and under-the-hood applications up to 125°C cyclic operating temperature.

An elastic material may be a thermoplastic elastomeric high-stretch material (e.g., a thermoplastic high-stretch elastomer). Examples of elastic materials for the stretch-band fixings disclosed herein include, but are not limited to, butyl rubber, ethylene propylene diene monomer (EPDM) rubber, polyisoprene, neoprene, fluoroelastomer, ethylene propylene rubber (EPR), ethylene-vinyl acetate (EVA), poly(acrylic acid) (PAA), latex, natural latex rubber, polyurethane, nitrile rubber, acrylonitrile butadiene rubber), styrene-butadiene, styrene-butadiene rubber (SBR), silicone rubber, polybutadiene, thermoplastic elastomers (TPE) (e.g., thermoplastic rubbers, styrenic block copolymers (thermoplastic styrenics) (TPS), thermoplastic polyolefinelastomers (thermoplastic olefin) (TPO), thermoplastic vulcanizates (TPV), thermoplastic polyurethanes (TPU), thermoplastic urethane, thermoplastic copolyester (TPC) (e.g., thermoplastic polyester elastomers (TPC-ET)), thermoplastic polyamides (TPA), styrene ethylene butadiene styrene (SEBS), and the like), poly(styrene-butadiene-styrene) (SBS), polybutylene terephthalate (PBT) and polytetramethylene glycol (PTMG) copolymer, synthetic rubber, foam rubber, silicone rubber, urethane, elastomer, other rubber-like materials, and the like, and copolymers, blends, and alloys thereof.

As used herein, the term "non-elastic" means any material (e.g., a "non-elastic material") that does not fall within the definition of "elastic" above. In aspects, a non-elastic material is a flexible, longitudinally tension-resistant material. Examples of non-elastic materials for stretch-band fixings disclosed herein include, but are not limited to, metal, polymeric materials (e.g., polyamide (PA), polypropylene (PP), polyethylene (PE), polyphenylene sulfide (PPS), polyether ether ketone (PEEK), polyaryletherketone (PAEK), ethylene tetrafluoroethylene (ETFE), polyacetal (POM), polybutylene terephthalate (PBT), ultraviolet stabilized polyacetal (POMUV), cross-linked thermoplastics, partially cross-linked thermoplastics, higher-temperature resins, ultraviolet (UV) resistant resins, other thermoplastic materials, and the like, and copolymers, blends, or alloys thereof)). In aspects, a non-elastic material may include one or more additives (e.g., heat stabilizers (e.g., copper iodide), impact modifiers (e.g., polyolefin, urethane, rubber), UV stabilizers (e.g., carbon black, hindered amine light stabilizers (HALS)), flame retardants (e.g., nitrogen-based halogen-free flame retardants, melamine cyanurate, melamine borate, ammonium polyphosphate), colorants, and the like).

In aspects, an elastic material and a non-elastic material used together in a stretch-band fixing are chemically compatible and/or are thermally compatible, enabling a chemical bond or other adhesion to form between the two materials. The chemical bond increases the strength of a connection and/or a mechanical interlock located between the two materials.

Described herein and illustrated in the Drawings are aspects of stretch-band fixings. The stretch-band fixings include a first connector of a first non-elastic material, a second connector of a second non-elastic material, and a tension device of an elastic material. The first and second non-elastic materials may be a same non-elastic material or may be different non-elastic materials. A connector (e.g., first connector, second connector) may be formed of a non-elastic material using known fabrication techniques (e.g., an injection molding process). Likewise, a tension device may be formed of an elastic material using known fabrication techniques (e.g., an injection molding process).

The first connector may include a first fastener portion configured for engaging a second fastener portion of the second connector to connect the first connector to the second connector. In other aspects, the first connector may not be configured for connecting to the second connector. In further aspects, the first connector is configured for connecting with itself and the second connector is configured for connecting with itself. A fastener portion may include one or more of a cable tie, a clamp member, a quick-release connector, a fastener component, a mechanical fastener, a friction-fit connector, an interference fit connector, a snap-fit connection, and the like and may be configured for connecting to another object or surface or another fastener portion. The first connector and the second connector may be different connectors and/or different types of connectors. The first connector may be a first clamp member, the second connector may be a second clamp member, and the first and second clamp members may be configured for connecting together (e.g., to form a loop). The first connector may be a first cable tie, the second connector may be a second cable tie, and the first and second cable ties may be configured for connecting to themselves and/or together (e.g., to form a loop). In aspects, multiple stretch-band fixings may be connected together to provide additional length, for example by connecting a first connector of a first stretch-band fixing to a second connector of a second stretch-band fixing. The first connector may be a cable tie configured for connecting to itself (e.g., to form a loop), and the second connector may be another type of connector.

A stretch-band fixing may include one or more mechanical interlocks configured to interlock a connector to a tension device. A mechanical interlock may provide strength (e.g., in one or more of the axial or transverse directions), security, stiffness, and/or durability to a joint between the tension device and a connector. A mechanical interlock may include a mechanical interlock portion defined on or by a connector (e.g., first connector, second connector). A mechanical interlock portion may include one or more ribs, bosses, keys, indentations, undercuts, or other features on a surface of a substrate material of a connector and/or orifices defined through the substrate material of the connector. A mechanical interlock portion may also include an overmold that interlocks with another mechanical interlock portion.

The tension device connects between the first connector and the second connector. A known fabrication technique (e.g., an overmolding process) may be utilized to form a connection between the tension device and a connector for a stretch-band fixing described in this disclosure. In an example overmolding process, an elastic material is injected into a mold cavity into which at least a portion of a non-elastic substrate (e.g., first connector, second connector) is positioned and the elastic material is overmolded over at least a portion of the non-elastic substrate. The overmolding process may be a multi-material molding process (e.g., a multi-shot injection molding process) where the non-elastic substrate is molded first, the injection molding cavity of the substrate mold is altered or the substrate is moved to a second mold, and the elastic material is injected into the mold to bond to at least a portion of the substrate and form the stretch-band fixing.

In aspects, the tension device includes an overmold portion that forms a mechanical interlock portion. For example, the tension device may include a first overmold portion that is overmolded onto at least a portion of the first connector to form a first mechanical interlock, and the tension device may include a second overmold portion that is overmolded onto at least a portion of the second connector to form a second mechanical interlock. Through the overmolding, the tension device may be integrally formed to the first connector and/or the second connector. Through the overmolding process, the elastic material of the tension device may chemically bond to the non-elastic material of the connector (e.g., the first connector, the second connector). In aspects, the overmolding of the first overmold portion onto the at least a portion of the first retainer to form the first mechanical interlock chemically bonds the first overmold portion to the tension device, and the overmolding of the second overmold portion onto the at least a portion of the second retainer to form the second mechanical interlock chemically bonds the second overmold portion to the tension device.

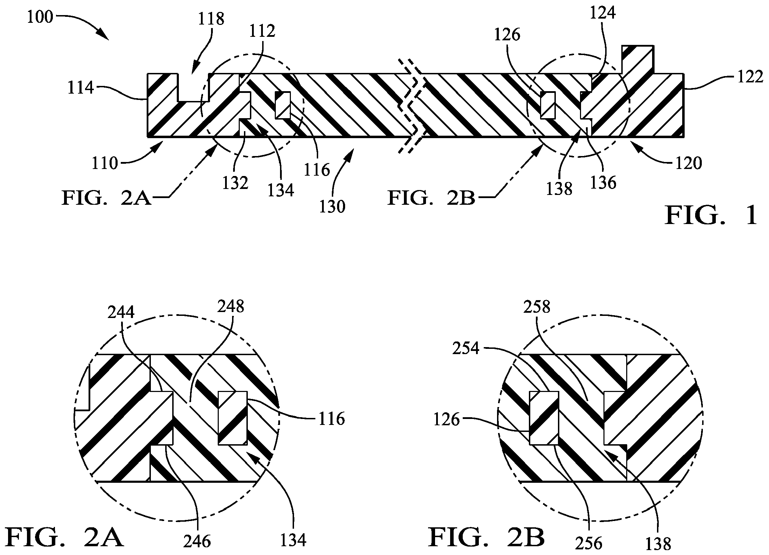

FIGs. 1, 2A, and 2B are schematic illustrations of an example stretch-band fixing 100. The stretch-band fixing 100 includes a first connector 110 of a first non-elastic material, a second connector 120 of a second non-elastic material, and a tension device 130 of an elastic material. In the schematic representation of FIG. 1, the first connector 110 includes a first fastener portion 118 that may be configured for engaging a second fastener portion 128 of the second connector 120 to connect the first connector 110 to the second connector 120. The first connector 110 may be a first cable tie, the second connector 120 may be a second cable tie, and the first and second cable ties may be configured for connecting to themselves and/or together (e.g., to form a loop).

In the stretch-band fixing 100 schematically illustrated in FIG. 1, the first connector 110 includes an inner side 112 opposite an outer side 114 and further includes a first retainer 116 that extends from the inner side 112. The second connector 120 includes an outer side 122 opposite an inner side 124 and a second retainer 126 that extends from the inner side 124. The stretch-band fixing 100 includes one or more mechanical interlocks configured to interlock the first connector 110 and/or the second connector 120 to the tension device 130. The first retainer 116 may include at least one mechanical interlock portion and the second retainer 126 may include at least one mechanical interlock portion. The first retainer 116 may include a first upper surface 244 opposite a first lower surface 246, and the mechanical interlock portion of the first retainer 116 may include at least one first interlock orifice (e.g., first interlock orifice 248) defined between the first upper surface 244 and the first lower surface 246. In such a configuration, the first interlock orifice 248 extends through the first retainer 116. The second retainer 126 may include a second upper surface 254 opposite a second lower surface 256, and the mechanical interlock portion of the second retainer 126 may include at least one second interlock orifice (e.g., second interlock orifice 258) defined between the second upper surface 254 and the second lower surface 256. In such a configuration, the second interlock orifice 258 extends through the second retainer 126.

The tension device 130 connects between the first connector 110 and the second connector 120. In aspects, the tension device 130 connects the inner side 112 of the first connector 110 to the inner side 124 of the second connector 120. In aspects, the tension device 130 includes an overmold portion that forms a mechanical interlock portion. For example, the tension device 130 may include a first overmold portion 132 that is overmolded onto at least a portion of the first retainer 116 to form a first mechanical interlock 134, and the tension device 130 may include a second overmold portion 136 that is overmolded onto at least a portion of the second retainer 126 to form a second mechanical interlock 138. Through the overmolding, the tension device 130 may be integrally formed to the first connector 110 and/or the second connector 120. The elastic material of the tension device 130 may extend through the first interlock orifice 248 and/or through the second interlock orifice 258. In such a configuration, the overmold (elastic) material fills in the orifices 248 and 258.

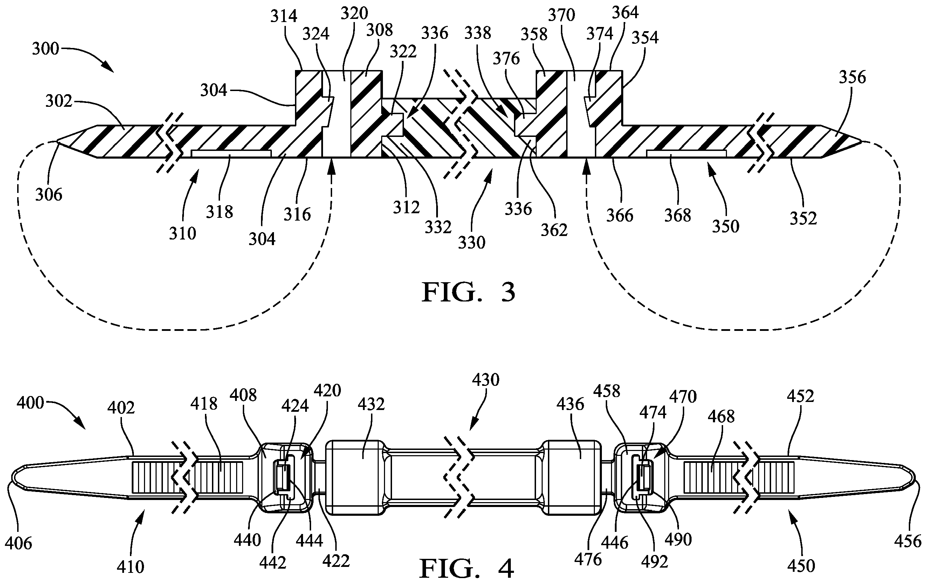

FIG. 3 is a schematic illustration of another stretch-band fixing 300. The stretch-band fixing 300 is similar to the stretch-band fixing 100 illustrated in FIGs. 1, 2A, and 2B and described above, except as detailed below. Thus, the stretch-band fixing 300 includes a first connector 310 of a first non-elastic material, a second connector 350 of a second non-elastic material, and a tension device 330 of an elastic material. The tension device 330 connects between the first connector 310 and the second connector 350.

In aspects, the stretch-band fixing 300 is a stretchable cable tie assembly that includes two cable ties. A cable tie, being able to be cinched down, provides for an adjustable length. As a result, a connection between the first connector 310 and itself, a connection between the second connector 350 and itself, and/or a connection between the first connector 310 and the second connector 350 is adjustable. An adjustability of the cable ties and/or elastic properties of the tension device 330 may enable a user to vary an amount of tension applied to elongated objects retained by the cable tie. In this way, the stretch-band fixing 300 may provide adjustable tension. Further, in this way, the stretch-band fixing 300 may provide cushion to a load (e.g., elongated objects) and minimize impacts received by the load. Additionally, the stretch-band fixing 300 may absorb impacts, thereby protecting the stretch-band fixing 300 from damage.

In the aspect illustrated in FIG. 3, the first connector 310 is configured as a first cable tie and the second connector 350 is configured as a second cable tie. The first connector 310 includes a head 308 (e.g., locking head) and a first elongated strap 302 that includes a tail end 306 opposite the head 308. The second connector 350 includes a head 358 (e.g., locking head) and a second elongated strap 352 that includes a tail end 356 opposite the head 358. The head 308 includes an outer side 304 opposite an inner side 312, and the head 358 includes an outer side 354 opposite an inner side 362. A first retainer 322 extends from the inner side 312 and a second retainer 376 extends from the inner side 362. The retainers 322 and 376 are configured for retaining the first connector 310 and second connector 350, respectively, on the tension device 330.

The first elongated strap 302 includes a plurality of serrations 318 on at least one lengthwise side of the first elongated strap 302, and the second elongated strap 352 includes a plurality of serrations 368 on at least one lengthwise side of the second elongated strap 352. The serrations (serrations 318, serrations 368) are configured to engage a pawl mechanism (e.g., pawl mechanism 324, pawl mechanism 374) located within the head (head 308, head 358). In the example of FIG. 3, the serrations are illustrated as disposed on bottom sides of the elongated straps. In aspects, the serrations are located on one of a top side, a bottom side, or both sides of an elongated strap. The plurality of serrations on the elongated strap enable a variable portion of the elongated strap to be inserted through the head, which provides a user with the ability to vary the amount of tension applied to the elongated objects retained by the cable tie. In this way, the stretch-band fixing 300 may provide adjustable tension.

The pawl mechanism (e.g., pawl mechanism 324, pawl mechanism 374) may be disposed within an interior of the head and configured for engaging the serrations (e.g., serrations 318, serrations 368) of one of the elongated straps, as is described in more detail below. In aspects, the pawl includes teeth configured for engaging the serrations of an elongated strap. The pawl mechanism 324 of the first elongated strap 302 may be configured for engaging the serrations 318 on the first elongated strap 302 and/or the serrations 368 on the second elongated strap 352. Likewise, the pawl mechanism 374 of the second elongated strap 352 may be configured for engaging the serrations 318 on the first elongated strap 302 and/or the serrations 368 on the second elongated strap 352. The plurality of serrations on the elongated strap enable a variable portion of the elongated strap to be inserted through the head, which provides a user with the ability to vary the length of the stretch-band fixing 300. In this way, the stretch-band fixing 300 may be length-adjustable.

The head 308 has a top side 314 and a bottom side 316, with a slot 320 defined therebetween that extends through the head 308. The head 358 has a top side 364 and a bottom side 366, with a slot 370 defined therebetween that extends through the head 358. In aspects, a slot (slot 320, slot 370) may include a first channel and a second channel (e.g., as described with respect to the stretch-band fixing 400 below). A slot may be configured to receive an elongated strap (e.g., first elongated strap 302, second elongated strap 352). The pawl mechanism (pawl mechanism 324, pawl mechanism 374) may be disposed within the slot such that when an elongated strap is disposed within the slot, the pawl mechanism engages the elongated strap to allow unidirectional movement of the elongated strap through the slot in a first direction and to resist movement of the elongated strap in an opposite direction.

The pawl of a pawl mechanism (e.g., pawl mechanism 324, pawl mechanism 374) may be connected to (e.g., tethered inside) the head (head 308, head 358). The pawl may be disposed within the second channel of the slot (e.g., slot 320, slot 370) and positioned internally to the head (e.g., head 308, head 358). The pawl may include multiple pawl teeth defined on a front side of the pawl. In aspects, the pawl teeth face the first channel and may be configured to engage the serrations (e.g., serrations 318, serrations 368) on an elongated strap (e.g., first elongated strap 302, second elongated strap 352) when a portion of the elongated strap is disposed within the slot (e.g., slot 320, slot 370), for example, within the first channel. In such a configuration, the elongated strap may be utilized to form a loop around one or more elongated objects to form a bundle. When the elongated strap is looped around the one or more elongated objects to form a bundle, the elastic material of the tension device 330 may provide a gripping force on the bundle that may prevent unwanted rotation of the bundle, which may be useful in applications during which vibration or other movement of a stretch-band fixing assembly may occur.

The tension device 330 includes a first overmold portion 332 that is overmolded onto at least a portion of the first retainer 322 and a second overmold portion 336 that is overmolded onto at least a portion of the second retainer 326. In this way, the tension device 330 may be integrally formed to the first connector 310 and/or the second connector 350, increasing the strength of the stretch-band fixing 300. The overmold portion (e.g., first overmold portion 332, second overmold portion 336) may form a mechanical interlock, as described above with respect to FIG. 1, FIG. 2A, and FIG. 2B. For example, the tension device 330 may include the first overmold portion 332 that is overmolded onto at least a portion of the first retainer 322 to form a first mechanical interlock 334 and the second overmold portion 336 that is overmolded onto at least a portion of the second retainer 326 to form a second mechanical interlock 338. In this way, the tension device 330 is mechanically interlocked to the first connector 310 and/or the second connector 350, increasing the strength of the stretch-band fixing 300.

The first retainer 322 extends from the head 308 of the first connector 310, and the second retainer 326 extends from the head 358 of the second connector 350. The head (e.g., head 308, head 358) has an inner side (e.g., inner side 312, inner side 362) opposite an outer side (e.g., outer side 304, outer side 354). The elongated strap (e.g., first elongated strap 302, second elongated strap 352) extends away from the inner side (e.g., inner side 312, inner side 362), and the retainer (e.g., first retainer 322, second retainer 326) extends away from the outer side (e.g., outer side 304, outer side 354). The first elongated strap 302 and the first retainer 322 may be co-planar, and/or the second elongated strap 352 and the second retainer 326 may be co-planar. In this way, a plurality of stretch-band fixings may be easily bundled for storage and/or packaged.

Another stretch-band fixing 400 is illustrated in FIGs. 4-6B. The stretch-band fixing 400 is a stretchable dual cable tie assembly that includes two cable ties. The stretch-band fixing 400 is similar to the stretch-band fixing 300 illustrated in FIG. 3 and described above, except as detailed below. Thus, the stretch-band fixing 400 includes a first connector 410 of a first non-elastic material, a second connector 450 of a second non-elastic material, and a tension device 430 of an elastic material. The tension device 430 connects between the first connector 410 and the second connector 450. The stretch-band fixing 400 further includes a first elongated strap 402, an inner side 504, a tail end 406, a first head 408, an outer side 512, a top side 514, a bottom side 516, serrations 418, a first slot 420, a first retainer 422, a pawl mechanism 424, a first overmold portion 432, a first mechanical interlock 534, a second overmold portion 436, a second mechanical interlock (not illustrated), a second elongated strap 452, an inner side 554, a tail end 456, a second head 458, an outer side 562, a top side 564, a bottom side 566, serrations 468, a second slot 470, a pawl mechanism 474, and a second retainer 476.

The head (e.g., first head 408, second head 458) includes a slot (e.g., first slot 420, second slot 470) that extends through the head. In the stretch-band fixing 400, the slot includes a first channel (e.g., first channel 440, first channel 490) configured to hold a pawl mechanism (e.g., pawl mechanism 424, pawl mechanism 474) and a second channel (e.g., second channel 442, second channel 492) configured to receive an elongated strap (e.g., elongated strap 402, elongated strap 452). The pawl mechanism includes a pawl hingedly disposed within the second channel of the slot. A pawl may include one or more pawl teeth (e.g., pawl teeth 444, pawl teeth 446) configured to engage one or more serrations (e.g., serrations 418, serrations 468) on an elongated strap (e.g., elongated strap 402, elongated strap 452) when at least a portion of the elongated strap is disposed within the second channel. The serrations may be located on one or more sides of the elongated strap, and the pawl may be located on one or more sides of the slot. The pawl is hingedly disposed within the second channel of the slot such that when an elongated strap is disposed within the second channel, the pawl mechanism engages the serrations on the elongated strap to allow unidirectional movement of the elongated strap through the second channel in a first direction and to resist movement of the elongated strap in an opposite direction.

The pawl mechanism (e.g., pawl mechanism 424, pawl mechanism 474) may include a release feature 602 (e.g., unlocking tab, unlocking lever) that extends from a top side of the pawl mechanism. The release feature 602 may be configured to enable an operator to digitally manipulate (e.g., utilizing a finger of the operator, utilizing a tool) the release feature 602 to disengage the pawl teeth on the pawl from engagement with the strap serrations. Disengagement of the pawl teeth from the strap serrations permits the elongated strap to be withdrawn from the head and the stretch-band fixing to be removed from securing the bundle. In this way, a stretch-band fixing may be reused without over-stretching the stretch-band fixing to disengage a connector from a support structure.

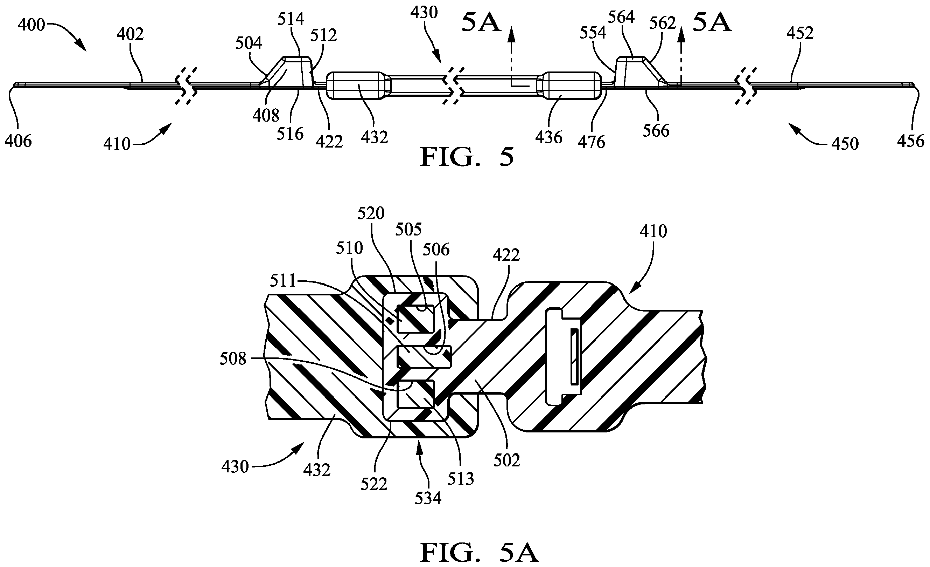

The retainer (e.g., first retainer 422, second retainer 476) may include at least one mechanical interlock portion, as described above with respect to FIG. 1, FIG. 2A, and FIG. 2B. The stretch-band fixing 400 is illustrated in FIGs. 4, 5, 5A, 6, and 7. FIG. 5A is a cross-sectional view along lines 5A-5A in FIG. 5, which illustrates the first overmold portion 432 overmolded onto the first retainer 422. The first retainer 422 may include an upper surface 502 opposite a lower surface 604, and the first mechanical interlock 534 may include at least one interlock orifice (e.g., interlock orifice 505, interlock orifice 506, interlock orifice 508) defined between the upper surface 502 and the lower surface 604. In such a configuration, the interlock orifice extends through the retainer.

The tension device 430 includes an overmold portion (e.g., first overmold portion 432, second overmold portion 436) that is overmolded onto at least a portion of the retainer (e.g., first retainer 422) to form the mechanical interlock (e.g., first mechanical interlock 534). In FIG. 5A, the elastic material of the tension device 430 is the first overmold portion 432 that includes overmold 510, overmold 511, and overmold 513, which respectively extend through the interlock orifice 505, interlock orifice 506, and interlock orifice 508 to form the mechanical interlock. Through the overmolding, the tension device 430 may be integrally formed to the connector (e.g., first connector 410, second connector 450). Further, the retainer (e.g., first retainer 422) may include one or more flanges (e.g., flange 520, flange 522), which are overmolded around to form the mechanical interlock.

The tension device 430 may include an elongated length with a cross-sectional profile that is wider than it is thick. The tension device 403 may further, along the ends along the elongated length, have full radiused perpendicular flanges forming an I-beam cross-section or a dog bone shaped cross-section.

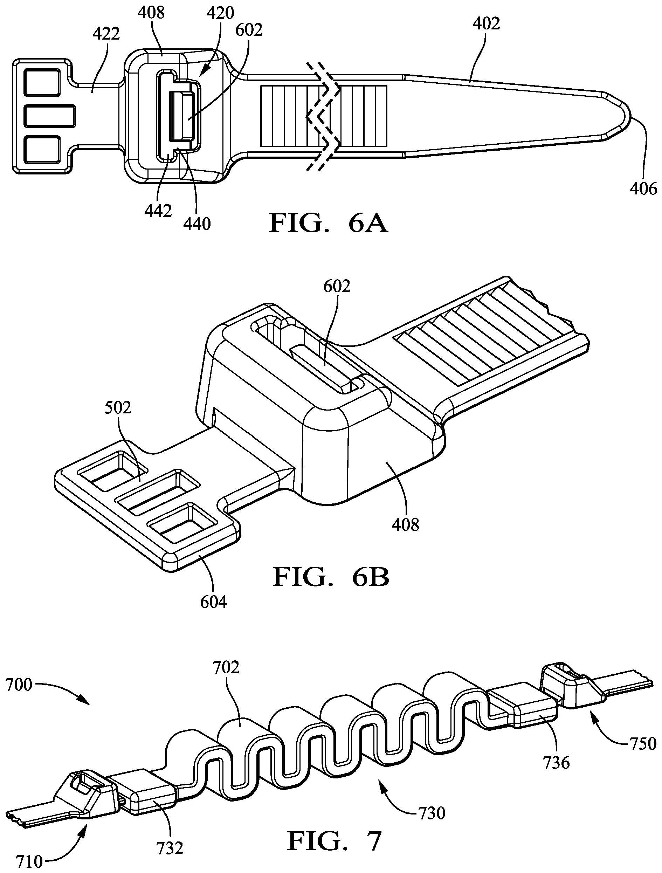

FIG. 7 illustrates another aspect of a stretch-band fixing 700. The stretch-band fixing 700 is similar to the stretch-band fixing 400 illustrated in FIGs. 4-6B and described above, except as detailed below. Thus, the stretch-band fixing 700 includes a first connector 710 of a first non-elastic material, a second connector 750 of a second non-elastic material, and a tension device 730 of an elastic material. The tension device 730 connects between the first connector 710 and the second connector 750. The tension device 730 includes a variable curve portion 702 between the first overmold portion 732 and the second overmold portion 736 that is elastically extensible in a longitudinal direction of the tension device 730. In aspects, the variable curve portion 702 follows a generally sinusoidal curve or corrugated shape. The variable curve portion 702 of the tension device 730 further permits the stretch-band fixing 700 to be further adjustable to various bundle diameters, enabling the stretch-band fixing 700 to further stretch to secure elongated items into a bundle while maintaining a compact shape.

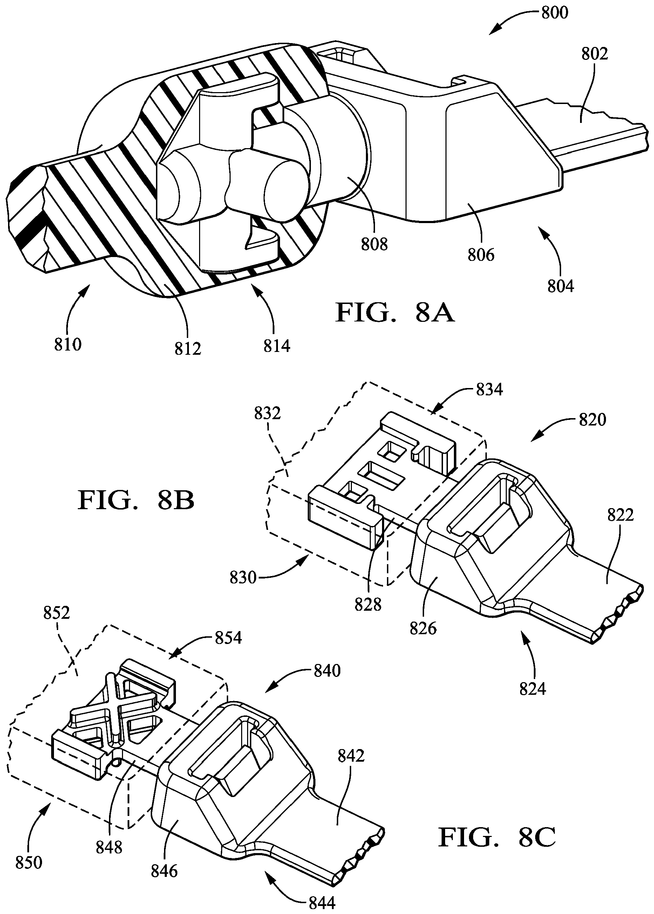

FIG. 8A is a partial, perspective view of a stretch-band fixing 800. The stretch-band fixing 800 is a stretchable cable tie assembly that includes at least one cable tie. The stretch-band fixing 800 is similar to the stretch-band fixing 400 illustrated in FIGs. 4-6B and described above, except as detailed below. Thus, the stretch-band fixing 800 includes a first connector 804 of a first non-elastic material, a second connector of a second non-elastic material, and a tension device 810 of an elastic material. The tension device 810 connects between the first connector 804 and the second connector. The stretch-band fixing 800 further includes an elongated strap 802, a head 806, a retainer 808, an overmold portion 812, and a mechanical interlock 814. The overmold portion 812 is overmolded onto at least a portion of the retainer 808 to form the mechanical interlock 814. The retainer 808 includes multiple hooks, ribs, bosses, keys, indentations, undercuts, or other features and/or orifices defined through the retainer 808 around which and/or through which through which the overmold material may flow to form the mechanical interlock 814. FIG. 8A illustrates interlocking geometry that may provide increased extraction strength (e.g., pull-apart strength) of the over-molded connection.

FIG. 8B is a partial, perspective view of a stretch-band fixing 820. The stretch-band fixing 820 is a stretchable cable tie assembly that includes at least one cable tie. The stretch-band fixing 820 is similar to the stretch-band fixing 400 illustrated in FIGs. 4-6B and described above, except as detailed below. Thus, the stretch-band fixing 820 includes a first connector 824 of a first non-elastic material, a second connector of a second non-elastic material, and a tension device 830 of an elastic material. The tension device 830 connects between the first connector 824 and the second connector. The stretch-band fixing 820 further includes an elongated strap 822, a head 826, a retainer 828, an overmold portion 832, and a mechanical interlock 834. The overmold portion 832 is overmolded onto at least a portion of the retainer 828 to form the mechanical interlock 834. The retainer 828 includes multiple hooks, ribs, bosses, keys, indentations, undercuts, or other features and/or orifices defined through the retainer 828 around which and/or through which through which the overmold material may flow to form the mechanical interlock 834. FIG. 8B illustrates interlocking geometry that may provide increased extraction strength (e.g., pull-apart strength) of the over-molded connection. In this figure, hooks are provided with increased perpendicular height to improve the extraction (pull-apart) force.

FIG. 8C is a partial, perspective view of a stretch-band fixing 840. The stretch-band fixing 840 is a stretchable cable tie assembly that includes at least one cable tie. The stretch-band fixing 840 is similar to the stretch-band fixing 400 illustrated in FIGs. 4-6B and described above, except as detailed below. Thus, the stretch-band fixing 840 includes a first connector 844 of a first non-elastic material, a second connector of a second non-elastic material, and a tension device 850 of an elastic material. The tension device 850 connects between the first connector 844 and the second connector. The stretch-band fixing 840 further includes an elongated strap 842, a head 846, a retainer 848, an overmold portion 852, and a mechanical interlock 854. The overmold portion 852 is overmolded onto at least a portion of the retainer 848 to form the mechanical interlock 854. The retainer 848 includes multiple hooks, ribs, bosses, keys, indentations, undercuts, or other features and/or orifices defined through the retainer 848 around which and/or through which through which the overmold material may flow to form the mechanical interlock 854. FIG. 8C illustrates interlocking geometry that may provide increased extraction strength (e.g., pull-apart strength) of the over-molded connection. In this figure, the height of perpendicular faces is increased to improve the extraction (pull-apart) force.

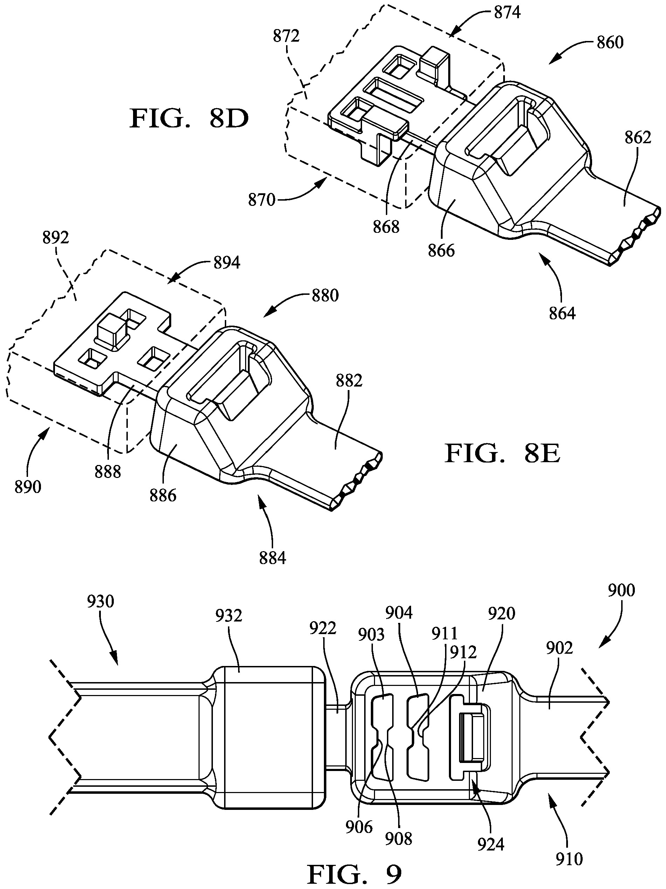

FIG. 8D is a partial, perspective view of a stretch-band fixing 860. The stretch-band fixing 860 is a stretchable cable tie assembly that includes at least one cable tie. The stretch-band fixing 860 is similar to the stretch-band fixing 400 illustrated in FIGs. 4-6B and described above, except as detailed below. Thus, the stretch-band fixing 860 includes a first connector 864 of a first non-elastic material, a second connector of a second non-elastic material, and a tension device 870 of an elastic material. The tension device 870 connects between the first connector 864 and the second connector. The stretch-band fixing 860 further includes an elongated strap 862, a head 866, a retainer 868, an overmold portion 872, and a mechanical interlock 874. The overmold portion 872 is overmolded onto at least a portion of the retainer 868 to form the mechanical interlock 874. The retainer 868 includes multiple hooks, ribs, bosses, keys, indentations, undercuts, or other features and/or orifices defined through the retainer 868 around which and/or through which through which the overmold material may flow to form the mechanical interlock 874. FIG. 8D illustrates interlocking geometry that may provide increased extraction strength (e.g., pull-apart strength) of the over-molded connection. In this figure, hooks are provided with increased perpendicular height to improve the extraction (pull-apart) force.

FIG. 8E is a partial, perspective view of a stretch-band fixing 880. The stretch-band fixing 880 is a stretchable cable tie assembly that includes at least one cable tie. The stretch-band fixing 880 is similar to the stretch-band fixing 400 illustrated in FIGs. 4-6B and described above, except as detailed below. Thus, the stretch-band fixing 880 includes a first connector 884 of a first non-elastic material, a second connector of a second non-elastic material, and a tension device 890 of an elastic material. The tension device 890 connects between the first connector 884 and the second connector. The stretch-band fixing 880 further includes an elongated strap 882, a head 886, a retainer 888, an overmold portion 892, and a mechanical interlock 894. The overmold portion 892 is overmolded onto at least a portion of the retainer 888 to form the mechanical interlock 894. The retainer 888 includes multiple hooks, ribs, bosses, keys, indentations, undercuts, or other features and/or orifices defined through the retainer 888 around which and/or through which through which the overmold material may flow to form the mechanical interlock 894. FIG. 8E illustrates interlocking geometry that may provide increased extraction strength (e.g., pull-apart strength) of the over-molded connection. In this figure, bosses are provided with increased height perpendicular faces to improve the extraction (pull-apart) force.

FIG. 9 is a partial, plan view of a stretch-band fixing 900. The stretch-band fixing 900 is a stretchable cable tie assembly that includes at least one cable tie. The stretch-band fixing 900 is similar to the stretch-band fixing 400 illustrated in FIGs. 4-6B and described above, except as detailed below. Thus, the stretch-band fixing 900 includes a first connector 910 of a first non-elastic material, a second connector of a second non-elastic material, and a tension device 930 of an elastic material. The tension device 930 connects between the first connector 910 and the second connector. The stretch-band fixing 900 further includes an elongated strap 902, a head 920, a retainer 922, a pawl mechanism 924, and an overmold portion 932.

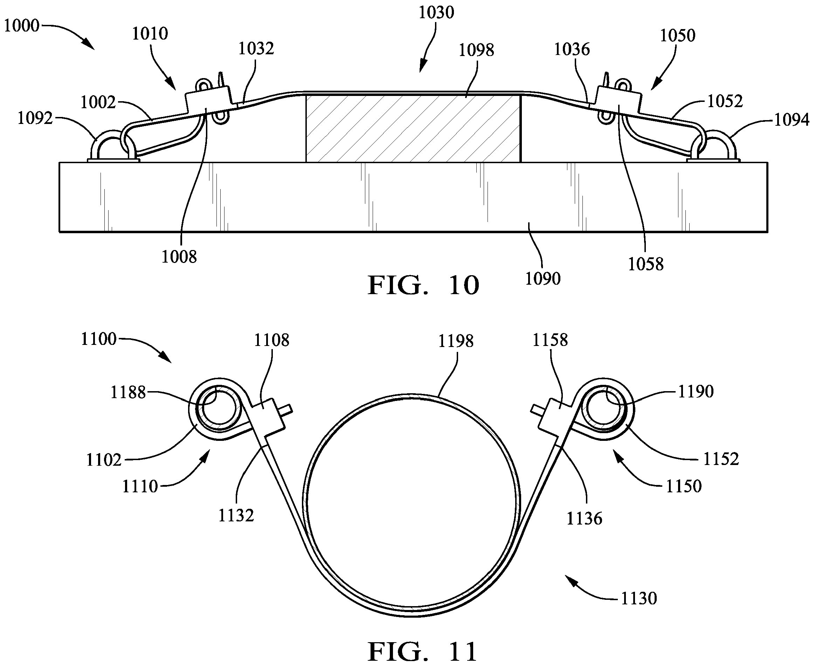

The first connector 910 includes at least one buckle (first buckle 903, second buckle 904) defined through at least one of the retainer 922 and/or the head 920. The buckle is sized to receive at least a portion of an elongated strap therethrough, thereby enabling excess length of the elongated strap to be tucked in and retained. In this way, an excess portion of an elongated strap can be stored in lieu of cutting the excess portion of the elongated strap off. In aspects, a pair of buckles may be provided to enable the elongated strap to be looped in a first direction and then in a second direction to secure the elongated strap in the buckle, for example, as illustrated with respect to the embodiment of FIG. 10. A buckle may further include one or more friction tabs (friction tab 906, friction tab 908, friction tab 911, friction tab 912) configured to engage or rub serrations on the elongated strap to store loops of excess strap when securing smaller items, in lieu of cutting off the excess strap. A buckle may be present in any of the stretch-band fixing aspects described herein.

FIG. 10 is an environmental view of an example use case for a stretch-band fixing 1000. The stretch-band fixing 1000 is a stretchable dual cable tie assembly that includes two cable ties. The stretch-band fixing 1000 is similar to the stretch-band fixing 400 illustrated in FIGs. 4-6B and described above, except as detailed below. Thus, the stretch-band fixing 1000 includes a first connector 1010 of a first non-elastic material, a second connector 1050 of a second non-elastic material, and a tension device 1030 of an elastic material. The tension device 1030 connects between the first connector 1010 and the second connector 1050. The stretch-band fixing 1000 further includes a first elongated strap 1002, a first head 1008, a first overmold portion 1032, a second overmold portion 1036, a second elongated strap 1052, and a second head 1058. FIG. 10 illustrates a support structure 1090 (e.g., a trailer bed) having a first attachment 1092 and a second attachment 1094. The first and second attachments 1092 and 1094 may be D-ring fasteners. In use, to secure an object 1098, the first elongated strap 1002 loops around the first attachment 1092 and connects with the first head 1008, the tension device 1030 is stretched, and the second elongated strap 1052 loops around the second attachment 1094 and connects with the second head 1058. In such a use case, the stretch-band fixing 1000 retains the object 1098 to the support structure 1090. Such a configuration may also find use in use cases associated with luggage racks, attaching luggage to a dolly, cargo carriers, bicycle hitch racks, bicycle racks, motorcycle racks, trunk lids, rear hatch back doors, campers, RVs, ATVs, UTVs, pickup truck boxes, trailers, kayaks, canoes, skis, fishing gear, hiking gear, camping gear, backpacks, hunting gear, scuba diving, securing lids to containers, securing cargo to paddle boards, securing shade canopies to support structure, and the like.

The stretch-band fixing 1000 may include a buckle, as described with respect to FIG. 9, defined through at least one of the retainer and/or the head. The buckle is sized to receive at least a portion of an elongated strap therethrough, thereby enabling excess length of the elongated strap to be tucked in and retained. In this way, an excess portion of an elongated strap can be stored in lieu of cutting the excess portion of the elongated strap off. In aspects, a pair of buckles may be provided to enable the elongated strap to be looped in a first direction and then in a second direction to secure the elongated strap in the buckle.

FIG. 11 is an environmental view of another example use case for a stretch-band fixing 1100. The stretch-band fixing 1100 is a stretchable dual cable tie assembly that includes two cable ties. The stretch-band fixing 1100 is similar to the stretch-band fixing 400 illustrated in FIGs. 4-6B and described above, except as detailed below. Thus, the stretch-band fixing 1100 includes a first connector 1110 of a first non-elastic material, a second connector 1150 of a second non-elastic material, and a tension device 1130 of an elastic material. The tension device 1130 connects between the first connector 1110 and the second connector 1150. The stretch-band fixing 1100 further includes a first elongated strap 1102, a first head 1108, a first overmold portion 1132, a second overmold portion 1136, a second elongated strap 1152, and a second head 1158.

FIG. 11 illustrates an elevated support structure 1188 and an elevated support structure 1190. In this Figure, the elevated support structure is illustrated as a pipe or conduit. In other aspects, the elevanted support structure can be another structure, including but not limited to mechanical fasteners, eye hooks, adhesive mounting bases, aluminum frame mounts, screw mounting bases, mounting plates, push mounts, masonry mounts, grip tie mounts, and the like. In use, to secure an object 1198 (e.g., a heating and cooling duct, an air plenum), the first elongated strap 1102 loops around the first elevated support structure 1188 and connects with the first head 1108, the tension device 1130 receives the object 1198, and the second elongated strap 1152 loops around the elevated support structure 1190 and connects with the second head 1158. In such a use case, the stretch-band fixing 1100 retains the object 1198 relative to the support structures (e.g., support structure 1188, support structure 1190). In this way, a stretch-band fixing may suppress sounds (e.g., expanding and contracting duct noise, fan speed noise, impact sounds). Further, a stretch-band fixing may support an object while allowing for expansion and contraction during heating and cooling cycles and providing for precise elevation height adjustments during incremental leveling of a duct system.

In other aspects, the stretch-band fixing 1100 could be configured so one or both of the portions of the strap exiting the head face away from the object. Further, the stretch-band fixing 1100 may include a buckle, as described with respect to FIG. 9, defined through at least one of the retainer and/or the head.

In a further implementation, a stretch-band fixing can be utilized to secure a large bundle together, for example, a pile of tree branches. In this use case, the first connector (e.g., first elongated strap) is wrapped around a stack of branches, the tail of the first elongated strap is inserted into the head of the second connector (e.g. second elongated strap), and the tail of the first elongated strap is pulled to apply circumferential tension to the tension device.

In yet a further implementation, a stretch-band fixing can be utilized to secure a large bundle (e.g., a pile of tree branches) to a structure (e.g., a trailer bed). In this use case, the first connector (e.g., first elongated strap) is wrapped around a stack of branches, the tail of the first elongated strap looped through a surface mount on the trailer and inserted into the head of the second connector (e.g. second elongated strap), and the tail of the first elongated strap is pulled to apply circumferential tension to the tension device. In this way, separate bundles can be secured for transport.

Included in this disclosure and described above are techniques directed to stretch-band fixing, including forming a bundle utilizing a stretch-band fixing and securing an object to a support structure utilizing a stretch-band fixing.

Also included in this disclosure and described above are techniques directed to the manufacture of stretch-band fixings. In one aspect, a method of manufacturing a stretch-band fixing includes a number of operations. In a first operation, a first connector of a non-elastic material and a second connector of a non-elastic material are molded. The first connector and the second connector may be molded in the same operation or in separate operations. In a second operation, a tension device is molded of an elastic material, the tension device connecting the first connector to the second connector. The tension device including a first overmold portion overmolded onto at least a portion of the first connector to form a first mechanical interlock and a second overmold portion overmolded onto at least a portion of the second connector to form a second mechanical interlock.

Some additional examples of stretch-band fixings are as follows:
Example 1. A stretch-band fixing comprising: a first cable tie formed of a non-elastic material, the first cable tie comprising a first head including a first pawl mechanism and a first elongated strap having a plurality of first serrations, the first head configured for receiving the first elongated strap with the first pawl mechanism engaging the first serrations; a second cable tie formed of the non-elastic material, the second cable tie comprising a second head including a second pawl mechanism and a second elongated strap having a plurality of second serrations, the second head configured for receiving the second elongated strap with the second pawl engaging the second serrations; and a tension device formed of an elastic material, the tension device connecting the first head to the second head, the tension device further comprising: a first overmold portion overmolded onto at least a portion of the first cable tie to form a first mechanical interlock; and a second overmold portion overmolded onto at least a portion of the second cable tie to form a second mechanical interlock.
Example 2. A stretch-band fixing comprising: a first connector comprising a first non-elastic material, the first connector including an outer side opposite an inner side, a first retainer extending from the first connector inner side, and a first elongated strap having a plurality of first serrations, the first connector further including a first head comprising: a first slot defined through the first head and configured to receive the first elongated strap; and a first pawl mechanism hingedly disposed within the first slot, the first pawl including multiple first pawl teeth configured to engage the plurality of first serrations on the first elongated strap when the first elongated strap is disposed within the first slot; a second connector comprising a second non-elastic material, the second connector including an outer side opposite an inner side, a second retainer extending from the second connector inner side, and a second elongated strap having a plurality of second serrations, the second connector further including a second head comprising: a second slot defined through the second head and configured to receive the second elongated strap; and a second pawl mechanism hingedly disposed within the second slot, the second pawl including multiple second pawl teeth configured to engage the plurality of second serrations on the second elongated strap when the second elongated strap is disposed within the second slot; and a tension device comprising an elastic material, the tension device connecting the inner side of the first connector to the inner side of the second connector, the tension device further comprising: a first overmold portion overmolded onto at least a portion of the first retainer to form a first mechanical interlock; and a second overmold portion overmolded onto at least a portion of the second retainer to form a second mechanical interlock.
Example 3. The stretch-band fixing of Example 2, wherein the first retainer includes a first upper surface opposite a first lower surface and the first mechanical interlock comprises at least one first interlock orifice defined between the first upper surface and the first lower surface, the first interlock orifice extending through the first retainer, and wherein the second retainer includes a second upper surface opposite a second lower surface and the second mechanical interlock comprises at least one second interlock orifice defined between the second upper surface and the second lower surface, the second interlock orifice extending through the second retainer.
Example 4. The stretch-band fixing of Example 3, wherein the elastic material of the tension device extends through the first interlock orifice to provide the first mechanical interlock and through the second interlock orifice to provide the second mechanical interlock.
Example 5. The stretch-band fixing of Example 2, wherein at least one of: the first retainer further comprises at least one rib, boss, key, indentation, or undercut, and the elastic material of the tension device extends around the at least one rib, boss, key, indentation, or undercut to provide the first mechanical interlock, or the second retainer further comprises at least one rib, boss, key, indentation, or undercut, and the elastic material of the tension device extends around the at least one rib, boss, key, indentation, or undercut to provide the second mechanical interlock.
Example 6. The stretch-band fixing of Example 2, wherein the elastic material comprises at least one of butyl rubber, ethylene propylene diene monomer (EPDM) rubber, polyisoprene, neoprene, fluoroelastomer, ethylene propylene rubber (EPR), ethylene-vinyl acetate (EVA), poly(acrylic acid) (PAA), latex, natural latex rubber, polyurethane, nitrile rubber, acrylonitrile butadiene rubber), styrene-butadiene, styrene-butadiene rubber (SBR), silicone rubber, or polybutadiene.
Example 7. The stretch-band fixing of Example 2, wherein the first non-elastic material and the second non-elastic material are the same non-elastic material.
Example 8. The stretch-band fixing of Example 7, wherein the same non-elastic material is at least one of polyamide, polypropylene, polyethylene, polyphenylene sulfide, polyether ether ketone, polyaryletherketone, polyacetal, polybutylene terephthalate, or copolymers, blends, or alloys thereof.
Example 9. The stretch-band fixing of Example 2, wherein the first non-elastic material is at least one of polyamide, polypropylene, polyethylene, polyphenylene sulfide, polyether ether ketone, polyaryletherketone, polyacetal, polybutylene terephthalate, or copolymers, blends, or alloys thereof, and wherein the second non-elastic material is at least one of polyamide, polypropylene, polyethylene, polyphenylene sulfide, polyether ether ketone, polyaryletherketone, polyacetal, polybutylene terephthalate, or copolymers, blends, or alloys thereof.
Example 10. The stretch-band fixing of Example 2, wherein the elastic material comprises thermoplastic elastomeric high-stretch material and the first and second non-elastic material comprises polyamide.
Example 11. The stretch-band fixing of Example 2, wherein the overmolding of the first overmold portion onto the at least a portion of the first retainer to form the first mechanical interlock chemically bonds the first overmold portion to the tension device, and wherein the overmolding of the second overmold portion onto the at least a portion of the second retainer to form the second mechanical interlock chemically bonds the second overmold portion to the tension device.
Example 12. The stretch-band fixing of Example 2, wherein the first retainer extends from the first head and wherein the second retainer extends from the second head.
Example 13. The stretch-band fixing of Example 2, wherein the first elongated strap extends away from the outer side of the first connector and the second elongated strap extends away from the outer side of the second connector.
Example 14. The stretch-band fixing of Example 13, wherein the first elongated strap, tension device, and second elongated strap are co-planar.
Example 15. The stretch-band fixing of Example 2, wherein the first connector is configured for forming a first loop around a first support structure and the second connector is configured for forming a second loop around a second support structure.
Example 16. The stretch-band fixing of Example 2, wherein the first slot includes a first channel and a second channel, the second slot includes a third channel and a fourth channel, the first channel of the first slot is configured to receive the first elongated strap, the first pawl is hingedly disposed within the first channel, the first pawl teeth are configured to engage the plurality of first serrations on the first elongated strap when the first elongated strap is disposed within the first channel, the third channel of the second slot is configured to receive the second elongated strap, the second pawl is hingedly disposed within the third channel, and the second pawl teeth are configured to engage the plurality of second serrations on the second elongated strap when the second elongated strap is disposed within the third channel.
Example 17. A stretch-band fixing comprising: a first connector comprising a first non-elastic material, the first connector including an outer side opposite an inner side, a first retainer extending from the first connector inner side, and a first elongated strap having a plurality of first serrations, the first elongated strap extending away from the outer side of the first connector, the first connector further including a first head comprising: a first slot defined through the first head and configured to receive the first elongated strap; and a first pawl hingedly disposed within the first slot, the first pawl including multiple first pawl teeth configured to engage the plurality of first serrations on the first elongated strap when the first elongated strap is disposed within the first slot; a second connector comprising a second non-elastic material, the second connector including an outer side opposite an inner side, a second retainer extending from the second connector inner side, and a second elongated strap having a plurality of second serrations, the second elongated strap extending away from the outer side of the second connector, the second connector further including a second head comprising: a second slot defined through the second head and configured to receive the second elongated strap; and a second pawl hingedly disposed within the second slot, the second pawl including multiple second pawl teeth configured to engage the plurality of second serrations on the second elongated strap when the second elongated strap is disposed within the second slot; and a tension device comprising an elastic material, the tension device connecting the inner side of the first connector to the inner side of the second connector, the tension device further comprising: a first overmold portion overmolded onto at least a portion of the first retainer to form a first mechanical interlock, the overmolding of the first overmold portion chemically bonding the first overmold portion to the tension device; and a second overmold portion overmolded onto at least a portion of the second retainer to form a second mechanical interlock, the overmolding of the second overmold portion chemically bonding the second overmold portion to the tension device.
Example 18. The stretch-band fixing of Example 17, wherein the first retainer includes a first upper surface opposite a first lower surface and the first mechanical interlock comprises at least one first interlock orifice defined between the first upper surface and the first lower surface, the first interlock orifice extending through the first retainer, wherein the second retainer includes a second upper surface opposite a second lower surface and the second mechanical interlock comprises at least one second interlock orifice defined between the second upper surface and the second lower surface, the second interlock orifice extending through the second retainer, and wherein the elastic material of the tension device extends through the first interlock orifice to provide the first mechanical interlock and through the second interlock orifice to provide the second mechanical interlock.
Example 19. The stretch-band fixing of Example 17, wherein at least one of: the first retainer further comprises at least one rib, boss, key, indentation, or undercut, and the elastic material of the tension device extends around the at least one rib, boss, key, indentation, or undercut to provide the first mechanical interlock, or the second retainer further comprises at least one rib, boss, key, indentation, or undercut, and the elastic material of the tension device extends around the at least one rib, boss, key, indentation, or undercut to provide the second mechanical interlock.
Example 20. The stretch-band fixing of Example 17, wherein the elastic material comprises at least one of butyl rubber, ethylene propylene diene monomer (EPDM) rubber, polyisoprene, neoprene, fluoroelastomer, ethylene propylene rubber (EPR), ethylene-vinyl acetate (EVA), poly(acrylic acid) (PAA), latex, natural latex rubber, polyurethane, nitrile rubber, acrylonitrile butadiene rubber), styrene-butadiene, styrene-butadiene rubber (SBR), silicone rubber, or polybutadiene, wherein the first and second non-elastic materials are a same non-elastic material, and wherein the same non-elastic material is at least one of polyamide, polypropylene, polyethylene, polyphenylene sulfide, polyether ether ketone, polyaryletherketone, polyacetal, polybutylene terephthalate, or copolymers, blends, or alloys thereof.

Although implementations for stretch-band fixings have been described in language specific to certain features and/or methods, the subject of the appended claims is not necessarily limited to the specific features or methods described. Rather, the specific features and methods are disclosed as example implementations for stretch-band fixings.

Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of' a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

## Claims

1. A stretch-band fixing comprising:
a first connector comprising a first non-elastic material, the first connector including an outer side opposite an inner side, a first retainer extending from the first connector inner side, and a first elongated strap having a plurality of first serrations, the first connector further including a first head comprising:
a first slot defined through the first head and configured to receive the first elongated strap; and
a first pawl mechanism hingedly disposed within the first slot, the first pawl including multiple first pawl teeth configured to engage the plurality of first serrations on the first elongated strap when the first elongated strap is disposed within the first slot;
a second connector comprising a second non-elastic material, the second connector including an outer side opposite an inner side, a second retainer extending from the second connector inner side, and a second elongated strap having a plurality of second serrations, the second connector further including a second head comprising:
a second slot defined through the second head and configured to receive the second elongated strap; and
a second pawl mechanism hingedly disposed within the second slot, the second pawl including multiple second pawl teeth configured to engage the plurality of second serrations on the second elongated strap when the second elongated strap is disposed within the second slot; and
a tension device comprising an elastic material, the tension device connecting the inner side of the first connector to the inner side of the second connector, the tension device further comprising:
a first overmold portion overmolded onto at least a portion of the first retainer to form a first mechanical interlock; and
a second overmold portion overmolded onto at least a portion of the second retainer to form a second mechanical interlock.

2. The stretch-band fixing of claim 1,
wherein the first retainer includes a first upper surface opposite a first lower surface and the first mechanical interlock comprises at least one first interlock orifice defined between the first upper surface and the first lower surface, the first interlock orifice extending through the first retainer, and
wherein the second retainer includes a second upper surface opposite a second lower surface and the second mechanical interlock comprises at least one second interlock orifice defined between the second upper surface and the second lower surface, the second interlock orifice extending through the second retainer.

3. The stretch-band fixing of claim 2, wherein the elastic material of the tension device extends through the first interlock orifice to provide the first mechanical interlock and through the second interlock orifice to provide the second mechanical interlock.

4. The stretch-band fixing of any one of claims 1 to 3, wherein at least one of:
the first retainer further comprises at least one rib, boss, key, indentation, or undercut, and the elastic material of the tension device extends around the at least one rib, boss, key, indentation, or undercut to provide the first mechanical interlock, or
the second retainer further comprises at least one rib, boss, key, indentation, or undercut, and the elastic material of the tension device extends around the at least one rib, boss, key, indentation, or undercut to provide the second mechanical interlock.

5. The stretch-band fixing of any one of claims 1 to 4, wherein the elastic material comprises at least one of butyl rubber, ethylene propylene diene monomer (EPDM) rubber, polyisoprene, neoprene, fluoroelastomer, ethylene propylene rubber (EPR), ethylene-vinyl acetate (EVA), poly(acrylic acid) (PAA), latex, natural latex rubber, polyurethane, nitrile rubber, acrylonitrile butadiene rubber), styrene-butadiene, styrene-butadiene rubber (SBR), silicone rubber, or polybutadiene.

6. The stretch-band fixing of any one of claims 1 to 5, wherein the first non-elastic material and the second non-elastic material are the same non-elastic material.

7. The stretch-band fixing of any one of claims 1 to 6,
wherein the first non-elastic material is at least one of polyamide, polypropylene, polyethylene, polyphenylene sulfide, polyether ether ketone, polyaryletherketone, polyacetal, polybutylene terephthalate, or copolymers, blends, or alloys thereof, and
wherein the second non-elastic material is at least one of polyamide, polypropylene, polyethylene, polyphenylene sulfide, polyether ether ketone, polyaryletherketone, polyacetal, polybutylene terephthalate, or copolymers, blends, or alloys thereof.

8. The stretch-band fixing of any one of claims 1 to 7, wherein the elastic material comprises thermoplastic elastomeric high-stretch material and the first and second non-elastic material comprises polyamide.

9. The stretch-band fixing of any one of claims 1 to 8,
wherein the overmolding of the first overmold portion onto the at least a portion of the first retainer to form the first mechanical interlock chemically bonds the first overmold portion to the tension device, and
wherein the overmolding of the second overmold portion onto the at least a portion of the second retainer to form the second mechanical interlock chemically bonds the second overmold portion to the tension device.

10. The stretch-band fixing of any one of claims 1 to 9, wherein the first retainer extends from the first head and wherein the second retainer extends from the second head.

11. The stretch-band fixing of any one of claims 1 to 10, wherein the first elongated strap extends away from the outer side of the first connector and the second elongated strap extends away from the outer side of the second connector.

12. The stretch-band fixing of any one of claims 1 to 11, wherein the first elongated strap, tension device, and second elongated strap are co-planar.

13. The stretch-band fixing of any one of claims 1 to 12, wherein the first connector is configured for forming a first loop around a first support structure and the second connector is configured for forming a second loop around a second support structure.

14. The stretch-band fixing of any one of claims 1 to 13, wherein
the first slot includes a first channel and a second channel,
the second slot includes a third channel and a fourth channel,
the first channel of the first slot is configured to receive the first elongated strap,
the first pawl is hingedly disposed within the first channel,
the first pawl teeth are configured to engage the plurality of first serrations on the first elongated strap when the first elongated strap is disposed within the first channel,
the third channel of the second slot is configured to receive the second elongated strap,
the second pawl is hingedly disposed within the third channel, and
the second pawl teeth are configured to engage the plurality of second serrations on the second elongated strap when the second elongated strap is disposed within the third channel.

15. The stretch-band fixing of any one of claims 1 to 14, comprising:
a first cable tie as the first connector formed of a non-elastic material, the first cable tie comprising the first head including the first pawl mechanism and the first elongated strap having the plurality of first serrations, the first head configured for receiving the first elongated strap with the first pawl mechanism engaging the first serrations;
a second cable tie as the second connector formed of the non-elastic material, the second cable tie comprising the second head including the second pawl mechanism and the second elongated strap having the plurality of second serrations, the second head configured for receiving the second elongated strap with the second pawl engaging the second serrations; and
the tension device formed of theelastic material, the tension device connecting the first head to the second head, the tension device further comprising:
the first overmold portion overmolded onto at least a portion of the first cable tie to form the first mechanical interlock; and
the second overmold portion overmolded onto at least a portion of the second cable tie to form the second mechanical interlock.
